# EUROPÄISCHE PATENTSCHRIFT

(11) **EP 0 394 769 B1**
(45) Veröffentlichungstag und Bekanntmachung des Hinweises auf die Patenterteilung: **07.01.1998**
(21) Anmeldenummer: 90107041.7
(22) Anmeldetag: 12.04.1990
(51) Int. Cl.: C08J 9/14, C08J 9/00, C08K 5/5333

(54) **Verfahren zur Herstellung eines halogenkohlenwasserstoff freien Polyurethanisolierschaumstoffs**
Process for the preparation of a halocarbon-free polyurethane insulating foam
Procédé de préparation d'une mousse de polyuréthane isolant sans hydrocarbure halogéné

(30) Priorität: 24.04.1989 DE 3913473; 09.10.1989 DE 3933705; 31.10.1989 DE 3936227; 08.02.1990 DE 4003718
(43) Veröffentlichungstag der Anmeldung: 31.10.1990
(73) Patentinhaber: Hützen, Hans Wilhelm, D-41747 Viersen (DE)
(72) Erfinder: Hützen, Hans Wilhelm, D-41747 Viersen (DE)
(74) Vertreter: Cohausz & Florack Patentanwälte

(56) Entgegenhaltungen:
- EP-A- 317 801
- EP-A- 0 078 478
- EP-A- 0 125 582
- EP-A- 0 334 059
- FR-A- 2 111 694
- GB-A- 876 977
- US-A- 3 135 707
- US-A- 3 189 565
- US-A- 3 509 076
- US-A- 4 139 501
- Enc. of Polymer Science and Engineering, Vol. 2. S. 432 bis 437

## Beschreibung

Die Erfindung betrifft einen Polyurethan-Isolierschaumstoff (nachfolgend kurz PUR-Isolierschaumstoff genannt) von besonders gleichmäßiger Zellenstruktur, insbesondere einen Hartschaumstoff und ein Verfahren zu dessen Herstellung.

Als nachteilig an diesem hervorragenden Material und seiner Herstellung ist unter Umweltgesichtspunkten die Tatsache, daß bisher für die Aufschäumung von PUR-Schaumstoffen, insbesondere PUR-Hartschaumstoffen, nahezu ausschließlich Fluorchlorkohlenwasserstoffe (FCKW) als Treibgas Verwendung finden und diese Fluorchlorkohlenwasserstoffe eine außerordentlich negative Auswirkung auf die Ozonschicht in der Atmosphäre der Erde haben.

Die EP-A-317801 betrifft ein Verfahren zum Herstellen von Formkörpern aus Polyurethan-Weich-Integralschaum, die stets eine äußere Schicht aus solidem Polyurethanmaterial und einem Kern aus PUR-Schaum enthalten.

Die EP-A-125582 beschreibt die Verwendung von Polyurethanzubereitungen, die bei Feuchtigkeitszutritt unter Volumenausdehnung härten als Klebstoffe zum Fixieren von Wärmedämm-Materialien an Gebäudeflächen. Enc. of Polymer Science and Engineering Vol. 2, S. 432 bis 437 (1985) beschreibt die Verwendung von Pentanen und Hexanen als Treibmittel zur Erzeugung von Zellen in polymeren Materialien.

Die GB-A-876977 offenbart PU-Hartschäume, die mittels n-Pentan oder n-Hexan verschäumt werden können.

Die US-A-4139501 beschreibt flexible, federnde Polyurethanschäume, die durch Umsetzen eines Polyols und eines organischen Polyisocyanats in Gegenwart eines Treibmittels und eines flammhemmenden Mittels. Als Treibmittel werden C₃₋₆-Alkane unter anderen vorgeschlagen. Flexible, federnde Polyurethanschäume sind offenzellig und unterscheiden sich dadurch von den überwiegend geschlossenzelligen Polyurethan-Hartschaumstoffen.

Aufgabe der vorliegenden Erfindung ist daher die Schaffung von Polyurethan-Isolierschaumstoffprodukten, die frei von Halogenkohlenwasserstoffen sind und insbesondere dabei geringes Raumgewicht, niedrige Lambda-Werte (= niedrige Wärmeleitfähigkeit, hohes Wärmeisolierungsvermögen) und hohe Brandschutzwerte (= niedrige Brandklasse) haben, sowie Verfahren zur Herstellung solcher PUR-Schaumstoffprodukte, bei denen irgendwelche Halogenkohlenwasserstoffe als Treibmittel nicht eingesetzt werden.

Der erfindungsgemäße PUR-Isolierschaumstoff, insbesondere PUR-Isolierhartschaumstoff, der noch übliche Zusatzstoffe, wie Katalysatoren, Stabilisatoren, Quervernetzer, und/oder Flammschutzmittel enthält, ist dadurch gekennzeichnet, daß seine im wesentlichen geschlossenen Poren frei von irgendwelchen Halogenkohlenwasserstoffen sind, seien es FCKW oder weiche FCKW, und untergeordnete Mengen des im erfindungsgemäßen Verfahren zur Herstellung desselben als Treibmittel eingesetzten organischen, flüssigen Mediums aus einem oder mehreren Niederalkanen mit 3 bis 6 Kohlenstoffatomen mit einem Siedepunkt bei Normaldruck zwischen -10 und +70°C enthält, daß er als Flammschutzmittel 5 bis 35 Gew. % des Gesamtgewichts des Schaumstoffs eines oder mehrerer flüssiger und/oder fester Flammschutzmittel enthält und als Katalysator einen oder mehrere basische oder stark basische Katalysatoren enthält. Der erfindungsgemäße PUR-Isolierschaumstoff ist von gleichmäßiger Porenstruktur und einem Raumgewicht von 30 g/cm³ oder weniger. Die in den Poren des Schaumstoffs anwesenden untergeordneten Mengen des verdampften Treibmittels können bis zu etwa 30 % des Porenvolumens betragen und sind im allgemeinen geringer, je nach eingesetzten PUR-Ausgangsstoffen, Dauer der Lagerung, Unterdruck bei der Lagerung, Lagertemperatur und dergleichen Bedingungen, die das Herausdiffundieren des Treibmittels durch die Porenwand des Schaumstoffes fördern.

In einer bevorzugten Ausführungsform enthalten die Poren des erfindungsgemäßen Schaumstoffs im Vergleich zu Luft größere Mengen Stickstoff und/oder ein oder mehrere Edelgase, dabei besonders bevorzugt Argon.

Vorzugsweise enthält der erfindungsgemäße PUR-Isolierschaumstoff 10 bis 20 Gew. % Flammschutzmittel, bezogen auf das Gesamtgewicht des erfindungsgemäßen PUR-Schaumstoffs, und dabei bevorzugt auf Phosphorbasis oder auf Borbasis. Ganz besonders bevorzugt enthält der erfindungsgemäße PUR-Schaumstoff ein festes Flammschutzmittel auf Basis von Ammoniumsalzen, wie ein Ammoniumsalz der Phosphorsäure, der Metaphosphorsäure, einer Polyphosphorsäure oder von Borsäure.

In einer besonders bevorzugten Ausführungsform enthält der PUR-Schaumstoff bzw. die PUR-Masse, allein oder zusammen mit einem festen Flammschutzmittel, ein flüssiges phosphorhaltiges Flammschutzmittel auf der Basis von Niederalkylestern von Niederalkanphosphonsäuren, und dies bevorzugt kombiniert mit Harnstoff, insbesondere in Mengen von 10 - 20 Gew.-%, bezogen auf das Gewicht des flüssigen phosphorhaltigen Flammschutzmittels. Ganz besonders bevorzugt enthält das flüssige phosphorhaltige Flammschutzmittel Harnstoff bis zur Sättigung gelöst.

Als basischer oder stark basischer Katalysator in üblichen Mengen wird z.B. ein Alkalisalz einer schwachen Säure eingesetzt, bevorzugt einer Alkancarbonsäure wie Essigsäure oder Octansäure, und ist somit in der bevorzugten Ausführungsform der erfindungsgemäßen fertigen PUR-Schaumstoffe enthalten.

Nach einer anderen ganz bevorzugten Ausführungsform enthält der erfindungsgemäße PUR-Isolierschaumstoff sowohl die geringen Mengen des bestimmten organischen Mediums als Treibmittel als auch das Flammschutzmittel in der bevorzugten Form der Ammoniumsalze der genannten Säuren sowie das bevorzugte flüssige Flammschutzmittel und Harnstoff in den genannten Mengen als auch den basischen bis stark basischen Katalysator. Je nach den Ausgangsprodukten enthält der erfindungsgemäße PUR-Schaumstoff gegebenenfalls bis zu 10 Gew.-% Emulgatoren. Ganz besonders bevorzugt enthält der Polyurethanschaumstoff einen Emulgator auf der Basis von gesättigten oder ungesättigten Fettsäuren oder Estern hiervon.

Das erfindungsgemäße Verfahren zur Herstellung der erfindungsgemäßen PUR-Isolierschaumstoffe ist dadurch gekennzeichnet, daß man als Treibmittel ein halogenfreies organisches flüssiges Medium aus einem oder mehreren Niederalkanen mit 3 bis 6 Kohlenstoffatomen mit einem Siedepunkt bei Normaldruck zwischen -10 und +70°C, als Flammschutzmittel 5 bis 35 Gew.-% des Gesamtgewichts des Schaumstoffs eines oder mehrerer flüssiger und/oder fester Flammschutzmittel und als Katalysator einen oder mehrere basische oder stark basische Katalysatoren einsetzt und das Treibmittel entweder in dem Gemisch aus der alkoholischen Ausgangskomponente und der Isocyanatausgangskomponente für den PUR-Schaumstoff in üblichem Verhältnis zwischen der Alkoholkomponente und der Isocyanatkomponente und den anderen Zusatzstoffen feinverteilt oder das Treibmittel in der alkoholischen Ausgangskomponente für den PUR-Schaumstoff unter Zumischung der anderen Zusatzstoffe emulgiert wird und sodann der Emulsion die Isocyanatkomponente in für PUR-Schaumstoffe üblichem Verhältnis zwischen der Alkoholkomponente und der Isocyanatkomponente zumischt und dann die Polymerisation der Ausgangskomponente für den herzustellenden PUR-Schaumstoff unter sonst üblichen Bedingungen, insbesondere Temperaturbedingungen, durchführt.

Dabei wird soviel des organischen flüssigen Mediums zugesetzt, wie es für die angestrebte PUR-Schaumstoffdichte, (d.h. Aufschäumung des erhaltenen Schaumstoffs) notwendig ist. Werden stärker aufgeschäumte, d.h. weniger dichte Schaumstoffe angestrebt, müssen größere Mengen des organischen flüssigen Mediums zugemischt werden. Der Fachmann kann die genau einzusetzende Menge anhand des bekannten Volumens des vergasten organischen flüssigen Mediums und der angestrebten Schaumstoffdichte bestimmen. Derartige Überlegungen sind dem Fachmann in Verbindung mit anderen vorbekannten Treibmitteln wie FCKW bekannt. Wenn der Siedepunkt des angewandten organischen flüssigen Mediums es erfordert, wird die Polymerisation vorzugsweise unter Aufrechterhaltung eines schwachen Über- oder Unterdrucks während des Aufschäumvorganges durchgeführt. Vorzugsweise wird der erhaltene PUR-Schaumstoff sodann für 2 Tage bis mehrere Monate, vorzugsweise 2 bis 7 Tage, bei Raumtemperatur bis schwach erhöhter Temperatur (ca. 45°C) bei atmosphärischem Druck bis schwach vermindertem Druck gelagert.

Der Ausgangsemulsion wird als Flammschutzmittel vorzugsweise das Flammschutzmittel auf Phosphorbasis oder Borbasis in flüssiger und/oder fester Form, vorzugsweise in einer Menge von 5 bis 35 Gew.-%, bevorzugt 10 bis 20 Gew.-%, bezogen auf das Gesamtgewicht des eingesetzten Reaktionsgemisches zugegeben. Ganz besonders bevorzugt ist ein Flammschutzmittel in Form eines Ammoniumsalzes auf Phosphor- und/oder Borbasis und bevorzugt nur in fester, kristalliner Form anwesend.

In einer anderen bevorzugten Ausführungsform des erfindungsgemäßen Verfahrens wird als flüssiges Flammschutzmittel ein Ester einer Niederalkanphosphonsäure mit 1 bis 4 Kohlenstoffatomen in der Niederalkangruppe, insbesondere ein Ester eines Niederalkanols mit 1 bis 4 Kohlenstoffatomen in der Estergruppe wie z.B. Methylphosphonsäuredimethylester eingesetzt. In einer weiter bevorzugten Ausführungsform wird hierbei das flüssige phosphorhaltige Flammschutzmittel im Gemisch mit Harnstoff in einer Menge von 10 bis 20 Gew.-%, bezogen auf das Gewicht des flüssigen phosphorhaltigen Flammschutzmittels, eingesetzt, insbesondere in einer solchen Menge, daß das flüssige phosphorhaltige Flammschutzmittel Harnstoff bis zur Sättigung gelöst enthält. Mit dieser Ausführungsform werden die guten Brandschutzwerte ganz besonders dauerhaft erreicht.

Geeignete Diisocyanate oder PUR-Prepolymere mit mindestens zwei endständigen Isocyanatgruppen sind dem Fachmann bekannt. Auch geeignete Dialkohole oder andere Verbindungen mit mindestens zwei freien Hydroxygruppen im Molekül wie Polyätherpolyole und/oder Polyesterpolyole sind dem Fachmann bekannt. Auch ist dem Fachmann bekannt, wie die Verbindungen der genannten Gruppen und in welchen Mengenverhältnissen diese Verbindungen zueinander zur Herstellung von PUR-Weichschaumstoffen, PUR-Halbhartschaumstoffe und PUR-Hartschaumstoffen eingesetzt werden.

Es wird hierzu auf die umfangreiche inländische und ausländische Patentliteratur der verschiedensten Patentinhaber in der Internationalen Patentklasse C 08 G Unterklasse 18 und auf die umfangreiche allgemeine Literatur verwiesen. Beispielhaft wird Römpp-Chemielexikon, 7. Aufl. (1975) S. 2774 - 2775, und die dort angegebenen weiteren zahlreichen Quellen angeführt.

Geeignete organische flüssige Medien sind solche, in denen die Alkoholkomponente von den PUR-Schaumstoffen nicht oder im wesentlichen nicht löslich ist und die mit der oder den Alkoholkomponenten für die Polyurethane, gegebenenfalls unter Zusatz eines Emulgators, bevorzugt in Mengen bis zu 10 Gew.-% der Menge an PUR-Ausgangsprodukten, Emulsionen zu bilden vermögen. Beispiele hierfür sind niedere Alkane, insbesondere mit 3 bis 6 Kohlenstoffatomen, wie n-Butan, n-Pentan, Isopentan, n-Hexan, Dimethylbutan oder Gemische hiervon, wie sie z.B. bei der Erdöldestillation anfallen und teilweise abgefackelt werden. Ganz besonders gute Ergebnisse werden mit n-Pentan oder mit Isopentan erhalten, weshalb diese organischen flüssigen Medien besonders bevorzugt sind. Damit ergibt sich ein sehr gleichmäßiger PUR-Schaumstoff mit feinen und feinsten Poren, die auch nach dem Lagern erhalten bleiben.

Die erfindungsgemäß eingesetzten flüssigen und festen Flammschutzmittel, insbesondere solche auf Phosphorbasis und auf Borbasis wie auch die bevorzugten Ammoniumsalze hiervon, sind dem Fachmann für verschiedene zu schützende Materialien ebenfalls vielfach bekannt. Beispiele hierfür sind insbesondere Borate, Phosphate, Metaphosphate und Polyphosphate. Von den Flammschutzmitteln, die zur Erreichung der Brandklasse B2 in Mengen von z.B. etwa 6000 g/m³ oder mehr erfindungsgemäß zugegeben werden, haben sich feste Ammoniumsalze dieser Gruppe besonders bewährt. Andere geeignete Flammschutzmittel der bevorzugten Gruppe der festen Produkte sind Bariummetaborat oder Zinkborat. Die festen Flammschutzmittel werden nicht über eine Hochdruckdosierpumpe zugeführt, da es sich um abrasive Pulver handelt, was zu einem starken Pumpenverschleiß führt. Zweckmäßigerweise erfolgt die Zudosierung über eine Mischschnecke unmittelbar nach Austritt der gemischten flüssigen Komponenten (PUR-Komponenten + flüssiges Medium) aus dem Mischkopf.

Geeignete Emulgatoren sind dem Fachmann ebenfalls bekannt. Geeignete Produkte der ganz besonders bevorzugten Ausführungsform der erfindungsgemäßen Produkte sind z.B. Fettsäurealkanolamidethoxylate.

Auch geeignete Produkte für die Quervernetzung des PUR-Schaumstoffs sind dem Fachmann bekannt wie bestimmte Mannichbasen. Selbst geringe Mengen Wasser wie 0,5 bis 2 Gew.-% des Ausgangsgemisches können als Quervernetzer wirken und dem Ausgangsgemisch zugefügt werden. Gegebenenfalls muß dann die Menge des eingesetzten Diisocyanats etwas erhöht werden, um das richtige Verhältnis zwischen Alkoholkomponente und Isocyanatkomponente zu erhalten. Bevorzugt werden beide Arten Quervernetzer eingesetzt.

Durch die bevorzugte Beimischung eines Emulgators zum Ausgangsgemisch wird die Mischbarkeit des flüssigen Treibmittels mit der PUR-Alkoholkomponente unter der erfindungsgemäß notwendigen Emulsionsbildung wesentlich verbessert, zum anderen aber ist dies bei der anschließenden Lagerung des fertig aufgeschäumten PUR-Schaumstoffes dem Austausch des oder der eingesetzten flüssigen und während des Schäumvorgangs verdampfenden organischen Medien gegen ungefährliche Gase förderlich.

Der für die bevorzugte anschließende Lagerung und den Austausch der eingesetzten organischen flüssigen Medien gegen ungefährliche Gase erforderliche Zeitraum ist abhängig von den Ausgangskomponenten, dem speziell eingesetzten organischen flüssigen Medium, der umgebenden Lufttemperatur, dem gegebenenfalls angewandten Unterdruck und von der Art und der Menge des vorteilhaft verwendeten festen Flammschutzmittels, des bevorzugten basischen Katalysators und/oder des Emulgators. Teilweise sind die PUR-Schaumstoffe gemäß Brandklasse 2 schon ohne Lagerung erhältlich, je nach Auswahl der Ausgangsstoffe und der eingesetzten Flammschutzmittel und ihrer Menge und auch der Katalysatoren. Die Lagerzeit beträgt im allgemeinen 2 - 7 Tage, manchmal mehrere, z.B. 6 Wochen bis selten 4 bis 6 Monate. Meist ist die Lagerung nach 3 bis 4 Tagen abgeschlossen. Dieser Austauschvorgang läßt sich auf einfache Weise kontrollieren, nämlich einmal durch das Brandverhalten, das sich nach einer gewissen Ablagerung auf alle Fälle stark verbessert, zum anderen durch einen leichten Anstieg der Wärmeleitzahl von 0,021 Kcal m/h°C bis 0,025 Kcal 1 Kcal = 4186 Jm/h°C. Diese zuletzt erwähnte Wärmeleitzahl von 0,025 Kcal m/h°C bleibt dann über einige Zeit meist vollkommen konstant, woraus zu schließen ist, daß der Austausch gegen die ungefährlichen Gase im gewünschten Ausmaß stattgefunden und im wesentlichen abgeschlossen ist. Wie gesagt, können je nach Wahl der Komponenten und/oder der Menge und Art der zugesetzten festen Flammschutzmittel auch Produkte der Brandklasse B2 ohne nachfolgende Lagerung erhalten werden. Auch wurde ein nachträglicher Abfall der Wärmeleitzahl von 0,025 Kcal m/h°C bis zu Werten von unter 0,0205 Kcal m/h°C beobachtet, die nach keinem der bisherigen Verfahren erreichbar waren.

Diametral zum vorgeschilderten Anstieg der Wärmeleitzahl verändert sich das Brandverhalten. Der PUR-Schaumstoff ist unmittelbar nach dem Aufschäumen häufig leicht entflamm- und brennbar. Das Brandverhalten wird in solchen Fällen in den Tagen der Lagerung immer besser und der PUR-Schaumstoff erreicht nach etwa 2 bis 7, insbesondere etwa 4 Tagen im allgemeinen ein Brandverhalten, das der Brandklasse B2 oder bei Polyisocyanuratschäumen und Zugabe größerer Mengen Flammschutzmittel sogar B1 entspricht. Die Dauerhaftigkeit des guten Brandverhaltens wird, wie erwähnt, durch den kombinierten Einsatz von flüssigen phosphorhaltigen Flammschutzmitteln und Harnstoff günstig gefördert.

Es ist mit der Erfindung verträglich, wenn geringe Mengen Halogenkohlenwasserstoffe als Treibmittel mitverwendet werden, z.B. um innerhalb der DIN 18164 zu bleiben, da gemäß seiner Ziff. 3.4 die von dieser DIN erfaßten PUR-Schaumstoffe als "unter Mitwirkung von Halogenkohlenwasserstoffen als Treibmittel durch chemische Reaktionen mit acidem Wasserstoff enthaltenden Verbindungen" definiert sind. Die erfindungsgemäß verwendeten bestimmten organischen flüssigen Medien sind mit geringen Mengen von Halogenkohlenwasserstoffen ohne weiteres mischbar, so daß z.B. 95 oder sogar 99% der notwendigen Halogenkohlenwasserstoffe durch die erfindungsgemäß bestimmten organischen flüssigen Medien ersetzt werden können. Auch können bei Mitverwendung von geringen Mengen FCKW oder Methylenchlorid, wobei letzteres in dem angegebenen Bereich siedet (Kp = 40°C), Emulgatoren ersetzt werden.

Die folgenden Beispiele erläutern die Erfindung weiter.

### Beispiel 1

Ein PUR-Hartschaumstoff wurde hergestellt, indem ein Gemisch aus

| | |
|---|---|
| 50 GT | eines Polyätheralkohols mit einer OH-Zahl von ca. 550 (Viskosität ca. 8000 cp 1 cP = 1 mPas bei 25°C) aus der Gruppe der CARADOL^{(R)}-Produkte der Fa. Shell Chemie, |
| 30 GT | eines gesättigten Polyesters mit Quervernetzer mit einer OH-Zahl von ca. 500 (Viskosität ca. 8 - 10000 cp bei 25°C), |
| 20 GT | eines aromatischen Polyätheralkohols mit einer OH-Zahl von ca. 500 (Viskosität ca. 5000 bei 25°C), |
| 7 GT | des flüssigen Flammschutzmittels Dimethylmethylphosphonat (DMMP) mit 26% Phosphorgehalt, |
| 5 GT | des Emulgators EUMOLGIN ^{(R)}550 der Fa. Henkel AG, |
| 2 GT | eines Silicons als Porenstabilisator, |
| 28 GT | des festen Flammschutzmittels Ammoniumpolyphosphat, |
| 3 GT | eines Katalysators auf Basis eines Alkaliacetats, |
| 18 GT | n-Pentan |

bei 22°C emulgiert wird. Der Emulsion werden in für die Herstellung von PUR-Schaumstoffen üblicher Weise
172 GT Diisocyanat MDI (Diphenylmethan-4,4'-diisocyanat
zugemischt und die erhaltene Mischung wird in einer üblichen Schäumanlage unter Normaldruck und bei Raumtemperatur geschäumt. Der erhaltene PUR-Schaumstoff wird anschließend bei Raumtemperatur (20°C) und Normaldruck 4 Tage gelagert.

Der erhaltene PUR-Schaumstoff hat folgende Eigenschaften:

Dichte unmittelbar nach der Herstellung: 30 - 40 g/cm³; Druckspannung unmittelbar nach der Herstellung: ca. 1,3 kp/cm² ; nach Lagerung von 4 - 6 Wochen: 1,6 - 1,7 kp/cm²; Brandverhalten unmittelbar nach der Herstellung: kurz aufflammend, dann jedoch selbstverlöschend; Brandverhalten nach 4-tägiger Lagerung: B2.

| | |
|---|---|
| Wärmeleitzahl unmittelbar nach Herstellung | ca. 0,021 |
| 20 Tage nach Herstellung | 0,024-25 |
| nach Lagerung von 14 - 16 Wochen | 0,022 |
| nach Lagerung von 4 - 6 Monaten | 0,0205 |

### Beispiel 2

Ein PUR-Hartschaumstoff wurde hergestellt, indem ein Gemisch aus

| | |
|---|---|
| 50 GT | eines Polyätheralkohols mit einer OH-Zahl von ca. 550 (Viskosität ca. 8000 cp bei 25°C), |
| 30 GT | eines gesättigten Polyesters mit Quervernetzer auf Mannichbase mit einer Gesamt-OH-Zahl von ca. 500 (Viskosität ca. 8 - 10000 cp bei 25°C), |
| 20 GT | eines aromatischen Polyätheralkohols mit einer OH-Zahl von ca. 500 (Viskosität ca. 5000 bei 25°C), |
| 7 GT | des flüssigen Flammschutzmittels Dimethylmethylphosphonat |
| 5 GT | des Emulgators EUMOLGIN ^{(R)}C 4 der Fa. Henkel AG, |
| 2 GT | eines Silicons als Porenstabilisator, |
| 48 GT | des festen Flammschutzmittels Monoammoniumphosphat, |
| 3 GT | des Katalysators auf Basis von Kaliumacetat, |
| 26 GT | n-Pentan im Gemisch mit bis zu 5% n-Propan und n-Butan |

bei Raumtemperatur emulgiert wird. Der Emulsion werden in für die Herstellung von PUR-Schaumstoffen üblicher Weise
172 GT Diisocyanat MDI
zugemischt und die erhaltene Mischung wird in einer üblichen Bandschäumanlage unter Normaldruck geschäumt. Der erhaltene PUR-Schaumstoff wird anschließend bei Raumtemperatur (20°C) und Normaldruck 4 Tage gelagert.

### Beispiel 3

Ein PUR-Hartschaumstoff wurde hergestellt, indem ein Gemisch aus

| | |
|---|---|
| 52 GT | eines Polyätheralkohols mit einer OH-Zahl von ca. 550 (Viskosität ca. 8000 cp bei 25°C), |
| 31 GT | eines gesättigten Polyesters mit Quervernetzer mit einer OH-Zahl von ca. 500 (Viskosität ca. 8 - 10000 cp bei 25°C), |
| 20 GT | eines aromatischen Polyätheralkohols mit einer OH-Zahl von ca. 500 (Viskosität ca. 5000 cp bei 25°C), |
| 7 GT | des flüssigen Flammschutzmittels mit 26% Phosphorgehalt, DMMP |
| 1 GT | H₂O, |
| 5 GT | des Emulgators EUMOLGIN ^{(R)}C 4 |
| 2 GT | eines Silicons als Porenstabilisator, |
| 50 GT | des festen Flammschutzmittels Diammoniumphosphat, |
| 2 GT | des Katalysators auf Basis des Kaliumoctoats, |
| 25 GT | n-Pentan |

bei 22°C emulgiert wird. Der Emulsion werden
172 GT Diisocyanat MDI
zugemischt und die erhaltene Mischung wird in einer üblichen Bandschäumanlage unter Normaldruck geschäumt. Der erhaltene PUR-Schaumstoff wird anschließend bei Raumtemperatur (20°C) und Normaldruck 4 Tage gelagert.

### Beispiel 4

Ein PUR-Hartschaumstoff wurde hergestellt, indem ein Gemisch aus

| | |
|---|---|
| 50 GT | eines Polyätheralkohols mit einer OH-Zahl von ca. 550 (Viskosität ca. 8000 cp bei 25°C) auf Basis der Produktengruppe SUCCR 05^{(R)}, |
| 32 GT | eines gesättigten Polyesters mit einer OH-Zahl von ca. 500 (Viskosität ca. 8 - 10000 cp bei 25°C), |
| 20 GT | eines aromatischen Polyätheralkohols mit einer OH-Zahl von ca. 500 (Viskosität ca. 5000 cp bei 25°C), |
| 7 GT | des flüssigen Flammschutzmittels DMMP mit 26% Phosphorgehalt, |
| 5 GT | des Emulgators EUMOLGIN ^{(R)} 550 der Fa. Henkel AG, |
| 2 GT | eines Silicons als Porenstabilisator, |
| 1 GT | H₂O als Quervernetzer, |
| 38 GT | des festen Ammoniumpolyphosphats gemischt mit 5% Zinkborat, |
| 3 GT | eines Katalysators auf Basis eines Alkaliacetats, |
| 27 GT | n-Pentan |

bei Raumtemperatur emulgiert wird. Der Emulsion werden
172 GT Diisocyanat MDI
zugemischt und die erhaltene Mischung wird in einer üblichen Bandschäumanlage unter Normaldruck geschäumt. Der erhaltene PUR-Schaumstoff wird anschließend bei Raumtemperatur (20 °C) und Normaldruck 4 Tage gelagert.

### Beispiel 5

Der PUR-Hartschaumstoff wurde wie folgt hergestellt: Ein Gemisch aus

| | |
|---|---|
| 50 GT | eines Polyätheralkohols mit einer OH-Zahl von ca. 550 (Viskosität ca. 8000 cp bei 25°C) aus der Gruppe der CARADOL ^{(R)}-Produkte der Fa. Shell Chemie, |
| 30 GT | eines gesättigten Polyesters mit Quervernetzer mit einer OH-Zahl von ca. 500 (Viskosität ca. 8 - 10000 cp bei 25°C), |
| 20 GT | eines aromatischen Polyätheralkohols mit einer OH-Zahl von ca. 500 (Viskosität ca. 5000 cp bei 25°C), |
| 8 GT | einer gesättigten Lösung von Harnstoff in dem flüssigen Flammschutzmittel Dimethylmethylphosphonat (DMMP) mit 26% Phosphorgehalt, die 1,05 GT Harnstoff in 7 GT DMMP enthält, |
| 5 GT | des Emulgators EUMOLGIN ^{(R)}550 der Fa. Henkel AG, |
| 2 GT | eines Silicons als Porenstabilisator, |
| 28 GT | des festen Flammschutzmittels Ammoniumpolyphosphat, |
| 3 GT | eines Katalysators auf Basis eines Alkaliacetats, |
| 18 GT | n-Pentan |

wurde bei 22°C emulgiert. Der Emulsion wurden in für die Herstellung von PUR-Schaumstoffen üblicher Weise
172 GT Diphenylmethan-4,4-diisocyanat
zugemischt und die erhaltene Mischung wurde in einer üblichen Schäumanlage unter Normaldruck und bei Raumtemperatur geschäumt. Der erhaltene PUR-Schaumstoff wurde anschließend bei Raumtemperatur (20 °C) und Normaldruck 4 Tage gelagert.

Der anfänglich erzielbare Brandschutzwert in Klasse B2 wurde, auch nach längerer Lagerung über mehrere Wochen, auch bei Erhitzen auf schwach erhöhte Temperatur gehalten.

## Patentansprüche

1. Verfahren zur Herstellung eines Polyurethan-Isolierschaumstoffs, bei dem ein halogenfreies organisches flüssiges Medium aus einem oder mehreren Niederalkanen mit 3 bis 6 Kohlenstoffatomen mit einem Siedepunkt bei Normaldruck zwischen -10 und +70 °C als Treibmittel, 5 bis 35 Gew.-% des Gesamtgewichts des Schaumstoffs eines oder mehrerer flüssiger und/oder fester Flammschutzmittel und ein oder mehrere basische oder stark basische Katalysatoren mit der alkoholischen Ausgangskomponente für den PUR-Schaumstoff unter Zumischung gegebenenfalls weiterer Zusatzstoffe emulgiert wird, sodann der Emulsion die Isocyanatkomponente in für PUR-Schaumstoffe üblichem Verhältnis zwischen der Alkoholkomponente und der Isocyanatkomponente zumischt und die Polymerisation der Ausgangskomponente für den herzustellenden PUR-Schaumstoff unter sonst üblichen Bedingungen, insbesondere Temperaturbedingungen, durchführt.

2. Verfahren nach Anspruch 1,
**dadurch gekennzeichnet**, daß man die Polymerisation unter Aufrechterhaltung eines schwachen Über- oder Unterdrucks während des Aufschäumvorgangs durchführt, wenn der Siedepunkt des angewandten organischen flüssigen Mediums es erfordert.

3. Verfahren nach Anspruch 1 oder 2,
**dadurch gekennzeichnet**, daß man den erhaltenen PUR-Schaumstoff anschließend für 2 Tage bis mehrere Monate bei Raumtemperatur oder schwach erhöhter Temperatur und unter atmosphärischem oder schwach vermindertem Druck lagert.

4. Verfahren nach Anspruch 3,
**dadurch gekennzeichnet**, daß der Emulgiervorgang in einem Vormischer kontinuierlich durchgeführt wird, bevor das Isocyanat zugemischt wird.

5. Verfahren nach Anspruch 4,
**dadurch gekennzeichnet**, daß die Emulgierung mit Hilfe eines oder mehrerer Emulgatoren erfolgt.

6. Verfahren nach Anspruch 5,
**dadurch gekennzeichnet**, daß der oder die Emulgatoren in einer Menge bis zu 10 Gew.-%, bezogen auf das Gewicht der alkoholischen Komponente des PUR-Schaumstoffs, zugesetzt wird bzw. werden.

7. Verfahren nach Anspruch 5 oder 6,
**dadurch gekennzeichnet**, daß als Emulgator oder Emulgatoren Produkte auf Basis von Fettsäuren und Derivaten hiervon verwendet werden.

8. Verfahren nach einem der Ansprüche 1 bis 7,
**dadurch gekennzeichnet**, daß man die Emulsion der alkoholischen Ausgangskomponente mit dem flüssigen Treibmittel, Flammschutzmittel und Katalysator mit einem oder mehreren Edelgasen sättigt.

9. Polyurethan-Schaumstoff, der Katalysatoren, Zellstabilisatoren und/oder Flammschutzmittel enthält, dessen Poren frei von Halogenkohlenwasserstoffen sind und untergeordneten Mengen des zur Herstellung des Schaumstoffs verwendeten Treibmittels, bestehend aus einem oder mehreren Niederalkanen mit 3 bis 6 Kohlenstoffatomen mit einem Siedepunkt bei Normaldruck zwischen -10 und +70 °C enthalten,
**dadurch gekennzeichnet**, daß die Poren zusätzlich ein oder mehrere Edelgas(e) enthalten und dieser Polyurethan-Schaumstoff durch das Verfahren nach Anspruch 8 erhältlich ist.

## Claims

1. Process for producing an insulating polyurethane aerated plastics wherein a non-halogenated organic liquid product consisting of one or more lower alkanes having 3 to 6 carbon atoms and having a boiling point between -10 and +70°C at normal pressure as foaming agent, one or more liquid and/or solid flame retardants in an amount of 5 to 35 parts by weight based upon the total weight of the aerated plastics and one or more basic or strongly basic catalysts is emulgated with the alcoholic starting component for the PUR aerated plastics being admixed to, if applicable, further additives, an isocyanate component is added to the emulsion in proportions between the alcoholic starting component and the isocyanate component usual for PUR foaming materials and the polymerization of the starting component for the PUR aerated plastics to be produced is effected under usual conditions, in particular usual temperature conditions.

2. Process according to claim 1, characterized in that the polymerization is effected while maintaining a pressure slightly above or slightly below normal pressure during the foaming process if this is necessary in view of the boiling point of the liquid organic medium used.

3. Process according to claims 1 or 2, characterized in that the PUR aerated plastics thus produced is stored at room temperature or at a slightly elevated temperature, and at normal pressure or slightly decreased pressure for a period ranging from 2 days to several months.

4. Process according to claim 3, characterized in that the emulgation process is effected in a continuous manner using a pre-mixer prior to addition of the isocyanate.

5. Process according to claim 4, characterized in that the emulgation is effected by use of one or several emulgating agents.

6. Process according to claim 5, characterized in that the emulgating agent or emulgating agents are added in an amount of up to 10% by weight based upon the weight of the alcoholic starting component for the PUR aerated plastics.

7. Process according to claim 5 or 6, characterized in that the emulgating agent or emulgating agents are products on the basis of fatty acids or their derivatives.

8. Process according to one of the claims 1 to 7, characterized in that the emulsion of the alcoholic starting component with the liquid foaming agent, the flame retardant and the catalyst is saturated with one or several noble gases.

9. Polyurethane aerated plastics comprising catalysts, pore stabilizing agents and/or flame retardants, wherein the pores are free of halogenated hydrocarbons and contain minor amounts of the foaming agents used in the production of the aerated plastics consisting of one or several lower alkanes having 3 to 6 carbon atoms and having a boiling point at normal pressure between -10 and +70°C, characterized in that the pores further contain one or several noble gases and in that said polyurethane aerated plastics can be obtained by the process according to claim 8.

## Revendications

1. Procédé pour la fabrication d'une mousse isolante de polyuréthane, dans lequel on utilise un agent liquide organique exempt d'halogène formé d'un ou de plusieurs alcane(s) inférieur(s) ayant de 3 à 6 atomes de carbone et ayant un point d'ébullition sous pression normale compris entre -10 et +70°C comme agent moussant, de 5 à 35% en poids rapportés au poids total de la mousse d'un ou plusieurs agent(s) d'ignification solide(s) et/ou liquide(s) et un ou plusieurs catalyseur(s) basique(s) ou fortement basique(s) avec le constituant alcool pour la mousse de PUR, avec addition éventuelle d'autres additifs, l'émulsion étant mélangée au constituant isocyanate dans les proportions usuelles pour les mousses de PUR entre le constituant alcool et le constituant isocyanate, et la polymérisation des constituants étant effectuée dans les conditions usuelles pour la préparation des mousses de PUR et, en particulier, dans les mêmes conditions de température.

2. Procédé selon la revendication 1, caractérisé en ce que l'on effectue la polymérisation en maintenant une légère surpression ou dépression pendant l'opération de formation de mousse si le point d'ébullition de l'agent liquide organique utilisé le nécessite.

3. Procédé selon la revendication 1 ou 2, caractérisé en ce que l'on stocke la mousse de PUR ainsi obtenue pendant une période allant de 2 jours à plusieurs mois à température ambiante ou à température légèrement plus élevée et sous pression atmosphérique ou légèrement réduite.

4. Procédé selon la revendication 3, caractérisé en ce que l'opération d'émulsionnement est effectuée en continu dans un prémélangeur avant l'addition de l'isocyanate.

5. Procédé selon la revendication 4, caractérisé en ce que l'émulsionnement est effectué à l'aide d'un ou plusieurs agents émulsifiants.

6. Procédé selon la revendication 5, caractérisé en ce que le ou les agent(s) émulsifiant(s) est (sont) ajouté(s) en quantité allant jusqu'à 10% en poids rapportée au poids du constituant alcool de la mousse de PUR.

7. Procédé selon la revendication 5 ou 6, caractérisé en ce que le ou les agent(s) émulsifiant(s) utilisés sont des produits à base d'acides gras et de leurs dérivés.

8. Procédé selon l'une des revendications 1 ou 7, caractérisé en ce que l'on sature l'émulsion du constituant alcool avec l'agent moussant liquide, l'agent d'ignifugation et le catalyseur, avec un ou plusieurs gaz nobles.

9. Mousse de polyuréthane contenant des catalyseurs, des stabilisants des pores et/ou des agents d'ignifugation, dont les pores sont exempts d'hydrocarbures halogénés et qui contiennent de faibles quantités de l'agent moussant utilisé pour la préparation de la mousse, constitués d'un ou de plusieurs alcanes inférieurs ayant de 3 à 6 atomes de carbone, avec un point d'ébullition sous pression normale compris entre -10 et +70°C, caractérisé en ce que les pores contiennent en outre un ou plusieurs gaz nobles et en ce que cette mousse de polyuréthane peut être obtenue par le procédé conforme à la revendication 8.
